# EUROPEAN PATENT APPLICATION

(11) **EP 4 769 780 A1**
(43) Date of publication of application: **01.07.2026**
(21) Application number: 25857182.7
(22) Date of filing: 09.07.2025
(51) Int. Cl.: H01M 50/383, H01M 50/342, H01M 50/375, H01M 10/658, H01M 50/211, H01M 50/249

(54) **BATTERY MODULE, BATTERY PACK AND VEHICLE INCLUDING SAME**

(30) Priority: 23.08.2024 KR 20240113757
(71) Applicant: LG Energy Solution, Ltd., Seoul 07335 (KR)
(72) Inventor: PARK, Ju-Hun, Daejeon 34122 (KR); PARK, Gi-Chan, Daejeon 34122 (KR); CHOI, Beom-Seok, Daejeon 34122 (KR)
(74) Representative: Plasseraud IP
(86) International application number: PCT/KR2025/009949
(87) International publication number: WO 2026/043095

(57) **Abstract**

A battery module according to an embodiment of the present disclosure may include a plurality of cell assemblies including one or more battery cells and a discharge area configured to discharge gas generated within the battery cell, and a plurality of covers individually disposed for the respective cell assemblies and configured to cover the discharge area.

## Description

This application is based on and claims priority from Korean Patent Application No. 10-2024-0113757, filed on August 23, 2024, with the Korean Intellectual Property Office, the disclosure of which is incorporated herein in its entirety by reference.

### TECHNICAL FIELD

The present disclosure relates to a battery module, and a battery pack and vehicle including the same.

### BACKGROUND ART

Secondary batteries, which offer high applicability across a wide range of product categories and possess electrical characteristics such as high energy density, are widely used not only in portable devices but also in electric vehicles (EVs) and hybrid electric vehicles (HEVs) powered by electrical power sources.

These secondary batteries are attracting attention as a new energy source for environmental friendliness and energy efficiency, not only because they may dramatically reduce fossil fuel use, but also because they produce no byproducts from energy use.

Currently, widely used secondary batteries include lithium-ion batteries, lithium polymer batteries, nickel-cadmium batteries, nickel-metal hydride batteries, and nickel-zinc batteries. When high output voltage is required, multiple battery cells are connected in series to form a battery module or battery pack. In addition, to increase charge/discharge capacity, multiple battery cells are connected in parallel to form a battery module or battery pack. Therefore, the number of battery cells included in a battery module or pack may vary depending on the required output voltage or charge/discharge capacity.

Meanwhile, since battery cells undergo chemical reactions during charging and discharging, their performance may deteriorate if used in environments above their optimal temperature. Furthermore, failure of the thermal control to maintain the operational temperature within a predefined optimal range may lead to a persistent risk of unexpected ignition or explosion. In addition, a battery module is structured to house these battery cells densely within a module frame. Accordingly, when a thermal event occurs in a certain battery cell, the resulting high-temperature gases and flames may spread to adjacent battery cells, potentially triggering a chain reaction of battery cell explosions, posing a significant risk.

In the case where a battery module includes multiple battery cells, the high-temperature gases, flames, and sparks generated by thermal runaway in a specific battery cell may be released, causing thermal damage to the battery module itself, as well as other components in electric vehicles that use the battery module, leading to structural collapse or a fire.

In particular, when flames generated from a specific battery module spread to the end plates of other battery modules, the risk of thermal propagation between modules and a chain reaction of fires may be significantly increased. This may lead to thermal runaway spreading throughout the entire battery pack, which includes multiple battery modules.

Therefore, there is a need to develop a structure capable of delaying thermal runaway between battery cells or battery modules by eliminating or minimizing the influence of high-temperature gases or flames emitted from one battery cell when a thermal event occurs in other battery cells.

### DISCLOSURE

### Technical Problem

The present disclosure is designed to solve the problems of the related art, and therefore the present disclosure is directed to preventing or minimizing the spread of a thermal event occurring in one battery cell to other battery cells.

In another aspect, the present disclosure is directed to providing a battery module capable of eliminating or minimizing the influence of gas or flames on surrounding components when a thermal event occurs in a battery cell.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery module including a plurality of cell assemblies including one or more battery cells and a discharge area configured to discharge gas generated within the battery cell, and a plurality of covers configured to be individually disposed for each of the plurality cell assemblies and cover the discharge area.

The covers may be configured to be individually detached from the cell assemblies when the pressure of the gas generated within the battery cell exceeds a reference pressure.

The covers may be configured to be individually melted when the temperature of the gas generated within the battery cell exceeds a reference temperature.

The plurality of covers may be arranged to be spaced apart from each other.

The battery module according to an embodiment of the present disclosure may further include one or more pads disposed between the plurality of cell assemblies.

The pad may include a thermal insulating material.

At least some pads of the one or more pads may extend so that a portion of the area of the at least some pads is disposed between the plurality of covers.

At least a some covers of the plurality of covers may be bonded to the cell assembly by an adhesive material.

The battery module according to an embodiment of the present disclosure may further include a case configured to enclose at least some of outer surfaces of the plurality of cell assemblies and having at least one opening formed in the case, and the plurality of covers may be exposed to the outside through the opening.

At least some covers of the plurality of covers may be fixed so that a portion of the area of the at least some covers is disposed between the case and the cell assembly.

At least some covers of the plurality of covers may be arranged in a row along the opening.

The case may include a plurality of the openings, and the plurality of covers may be individually disposed at positions corresponding to the plurality of openings and exposed to the outside.

The case may enclose at least three outer surfaces of the plurality of cell assemblies, and the opening may be formed on at least one side of the case, and at least some covers of the plurality of covers may be sandwiched between the cell assembly and the case or bonded to the cell assembly by an adhesive material.

The battery module according to an embodiment of the present disclosure may be configured such that, when the gas is discharged from an interior of a battery cell within any one cell assembly of the plurality of cell assemblies, a cover corresponding to the relevant cell assembly, among the plurality of covers, is detached from the cell assembly, and such that the remaining ones of the plurality of covers are not detached from the remaining ones of the plurality of cell assemblies.

The cover may include a fire-resistant and heat-resistant material.

The battery cell may have a plate shape, and the cell assembly may be configured by stacking the battery cells face-to-face, and the discharge area may be disposed at the bottom of the cell assembly.

According to another aspect of the present disclosure, there is provided a battery pack including the battery module described above.

According to another aspect of the present disclosure, there is provided a vehicle including the battery pack described above.

### Advantageous Effects

According to various embodiments of the present disclosure, a battery module, and a battery pack and vehicle including the same are capable of eliminating or minimizing the thermal impact of high-temperature gases or flames generated from a specific battery cell on other battery cells by confining the area where gas generated inside the battery cell is discharged, thereby effectively preventing or minimizing thermal runaway propagation between battery cells.

In addition, according to various embodiments of the present disclosure, a battery module, and a battery pack and vehicle including the same are capable of preventing or minimizing the discharge of gases or flames to surrounding battery cells, battery modules, or other components of the vehicle by restricting the direction in which gases generated inside a battery cell are discharged when an abnormal situation, such as thermal runaway, occurs in the battery cell.

The effects obtainable from the present disclosure are not limited to the above-mentioned effects, and other effects not mentioned above will be clearly understood by those skilled in the art to which the disclosure pertains from the description of the invention described below.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a drawing illustrating a battery module according to an embodiment of the present disclosure.
FIG. 2 is a drawing illustrating a state in which some components are separated from a battery module according to an embodiment of the present disclosure.
FIG. 3 is a cross-sectional view of a battery module according to an embodiment of the present disclosure.
FIG. 4 is a drawing illustrating the detachment of a cover of a battery module according to an embodiment of the present disclosure.
FIG. 5 is a drawing illustrating the melting of a cover of a battery module according to an embodiment of the present disclosure.
FIG. 6 is a cross-sectional view illustrating the arrangement of a cover and a pad of a battery module according to an embodiment of the present disclosure.
FIG. 7 is a drawing illustrating a battery module including a case according to an embodiment of the present disclosure.
FIG. 8 is a drawing illustrating a battery module including a case according to an embodiment of the present disclosure.
FIG. 9 is a cross-sectional view illustrating the arrangement of a cover and a case of a battery module according to an embodiment of the present disclosure.
FIG. 10 is a cross-sectional view illustrating the arrangement of a cover and a case of a battery module according to an embodiment of the present disclosure.
FIG. 11 is a drawing illustrating the arrangement of a cover and an opening of a battery module according to an embodiment of the present disclosure.
FIG. 12 is a diagram illustrating the arrangement of a cover and an opening of a battery module according to an embodiment of the present disclosure.
FIG. 13 is a diagram illustrating a battery pack including a battery module according to an embodiment of the present disclosure.
FIG. 14 is a diagram illustrating a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

In addition, the present disclosure may include various embodiments. Redundant descriptions of substantially the same or similar configurations will be omitted from respective embodiments, and a description will be made based on differences therebetween.

In addition, for purposes of better understanding the present disclosure, the accompanying drawings are not necessarily drawn to scale, and the dimensions of certain elements may be exaggerated for clarity. In addition, the same reference numerals may indicate the same elements across different embodiments.

Throughout the specification, unless otherwise expressly stated, each component may be singular or plural.

Additionally, the expression "an element is 'connected,' 'coupled,' or 'joined' to another element" should be understood that the two elements may be directly connected or joined to each other, and that another element may be "interposed" between the two elements, or that the two elements may be "connected," "coupled," or "joined" via another element.

The singular expressions used herein are intended to include the plural expressions unless the context clearly indicates otherwise. In the present application, terms such as "comprise" or "include" should not be interpreted as necessarily encompassing all of the various components or steps described in the specification, and some of the components or steps may be omitted, or additional components or steps may be further included.

Throughout the specification, unless otherwise stated, the expression "A and/or B" may refer to A, B, or both A and B.

Meanwhile, although terms indicating directions such as up(ward), down(ward), left, right, front(ward), and back(ward) are used in this specification, it is obvious to those skilled in the art to which the present disclosure pertains that these terms are only for convenience of explanation with reference to the relevant drawings and may vary depending on the position, arrangement, or rotation of the target object or the position of the observer.

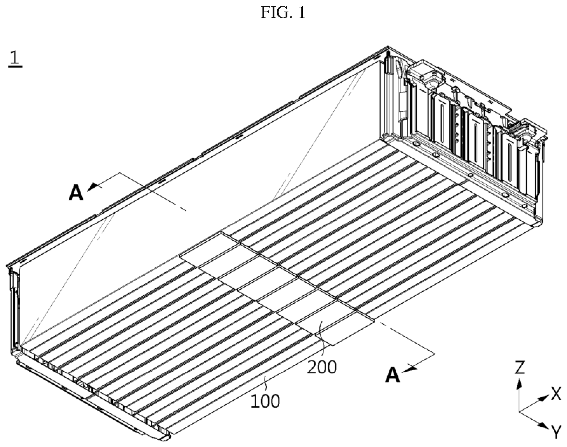

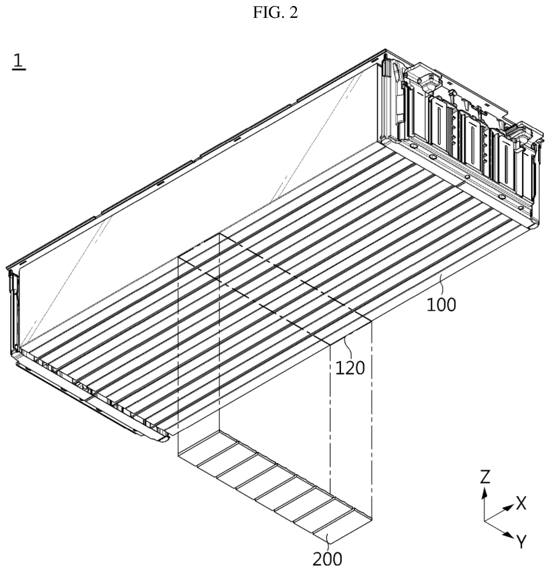

Hereinafter, the overall structure of a battery module according to an embodiment of the present disclosure will be described with reference to FIGS. 1 and 2.

FIG. 1 is a drawing illustrating a battery module according to an embodiment of the present disclosure, which is a bottom perspective view of the battery module. FIG. 2 is a drawing illustrating a state in which some components are separated from a battery module according to an embodiment of the present disclosure, which illustrates that a component indicated by reference numeral 200 is detached from the battery module in FIG. 1.

Referring to FIGS. 1 and 2, a battery module 1 according to an embodiment of the present disclosure may include a cell assembly 100 and a cover 200.

The battery module 1 may include one or more cell assemblies 100. Referring to FIGS. 1 and 2, the battery module 1 may include multiple cell assemblies 100. The number of cell assemblies 100 included in the battery module 1 is not limited.

The cell assembly 100 may include one or more battery cells. The battery cell included in the battery module 1 of the present disclosure is not limited to a specific type or shape. For example, the battery cell may be a plate-shaped battery cell, but is not limited thereto. For example, cylindrical or prismatic battery cells may also be applied to the present disclosure. The cell assembly 100 may be configured by stacking battery cells face-to-face. For example, the plurality of battery cells extending in the ±X direction may be stacked side by side in the ±Y direction while standing in a vertical direction (±Z direction).

The number of battery cells included in the cell assembly 100 is not limited. For example, the cell assembly 100 may include two battery cells. As another example, the cell assembly 100 may include one battery cell.

The battery cell may include an electrode assembly, a cell case accommodating the electrode assembly, and electrode leads connected to the electrode assembly and extending outward from the cell case to function as electrode terminals. For example, the battery cell may be a pouch-type secondary battery. Such a pouch-type secondary battery may have a cell case configured as a pouch in which a metal layer made of aluminum is interposed between polymer layers.

Chemical reactions occur within the battery cell during charging and discharging, and when the heat generated during this reaction is not properly controlled, thermal runaway may occur. When thermal runaway begins, high-temperature gas, flames, and/or sparks may be generated within the battery cell.

Referring to FIG. 2, the cell assembly 100 may include a discharge area 120 to discharge gases generated within the battery cell when thermal runaway occurs. A discharge area 120 may be formed in a region of the battery cell, and the cell assembly 100 may include the discharge area 120 by including one or more battery cells having the discharge area 120. For example, when the cell assembly 100 includes multiple battery cells, the discharge area 120 may be formed in each of the multiple battery cells, so that a collection of discharge areas 120 of the multiple battery cells included in the cell assembly 100 may constitute the discharge area 120 of the cell assembly 100. As another example, when the cell assembly 100 includes one battery cell, the discharge area 120 of one battery cell may become the discharge area of the cell assembly 100.

The discharge area 120 may be configured to facilitate the discharge of gases generated within the battery cell. For example, the discharge area 120 may include, but is not limited to, either a discharge hole or a rupture line.

The discharge area 120 is an area that opens when high-temperature gas is generated within the battery cell, thereby discharging the high-temperature gas, and thus may have a relatively weak sealing force compared to other areas of the battery cell. The discharge area 120 may also be an area provided with a venting structure to allow ventilation therethrough. The discharge area 120 may also refer to a space provided by another component (not shown) within the battery module 1 in order to prevent gas discharged from the battery cell from moving to other portions and allow the gas to move to a specific portion of the cell assembly 100 and then be discharged. The discharge area 120 may be provided anywhere in the cell assembly 100, but in the illustrated example, it is located at the bottom of the cell assembly 100.

Since the discharge area 120 may be exposed to thermal or physical events occurring both inside and outside the battery cell, it is necessary to provide protection for the discharge area 120 from external influences of the battery cell.

The cover 200 may cover at least a portion of the discharge area 120 of the cell assembly 100. By covering the discharge area 120, the cover 200 may protect the battery cell from various external events.

When a thermal event occurs in the cell assembly 100 where the cover 200 is disposed, causing gas to be released, the cover 200 may be detached or melted to facilitate the discharge of the gas. At the same time, the cover 200 may protect the cell assembly 100 by eliminating or minimizing the impact of external events on the cell assembly 100 where the thermal event has not occurred. The detachment and melting of the cover 200 will be described in more detail below with reference to other drawings.

FIG. 2 illustrates the cover 200 that is spaced a predetermined distance from the discharge area 120 in the -Z direction. The cover 200 illustrated in FIG. 2 may be moved in the +Z direction to cover the discharge area 120, as in the state depicted in FIG. 1.

A plurality of covers 200 may be provided and individually disposed for respective discharge areas 120 of multiple cell assemblies 100. For example, the number of covers 200 may be the same as the number of cell assemblies 100 so that the covers are respectively disposed at positions corresponding to the discharge areas 120 of cell assemblies 100, thereby covering the discharge areas 120. Since the cover 200 is not formed over the entire cell assembly 100, it may confine each discharge area 120. However, in the present disclosure, the number of covers 200 is not limited to the number of cell assemblies 100.

The cover 200 of the battery module 1 of the present disclosure may include a fire-resistant and/or heat-resistant material, but the material included in the cover 200 is not limited. For example, the cover 200 may include at least one of glass fiber, mica, and plastic.

The battery module 1 according to an embodiment of the present disclosure may be mounted to a vehicle (not shown) to supply power to other components of the vehicle. For example, the battery module 1 may be disposed under the vehicle, and the discharge area 120 and/or the cover 200 may be disposed to face downward from the vehicle. The downward direction of the vehicle may refer to the direction toward the ground. In this case, other components of the vehicle may be disposed above the battery module 1 (in the +Z direction). Specifically, when the battery module 1 is disposed in the vehicle, the side of the battery module 1 facing the -Z direction may face the lower side of the vehicle (i.e., the ground), and the side of the battery module 1 facing the +Z direction may face the interior of the vehicle.

With this arrangement, when a thermal event occurs in one or more battery cells, high-temperature gas or flames may be discharged toward the lower side of the vehicle and onto the ground, thereby performing downward venting. This may minimize the impact on other components of the vehicle, prevent fire from spreading throughout the vehicle, and preventing occupants from being harmed.

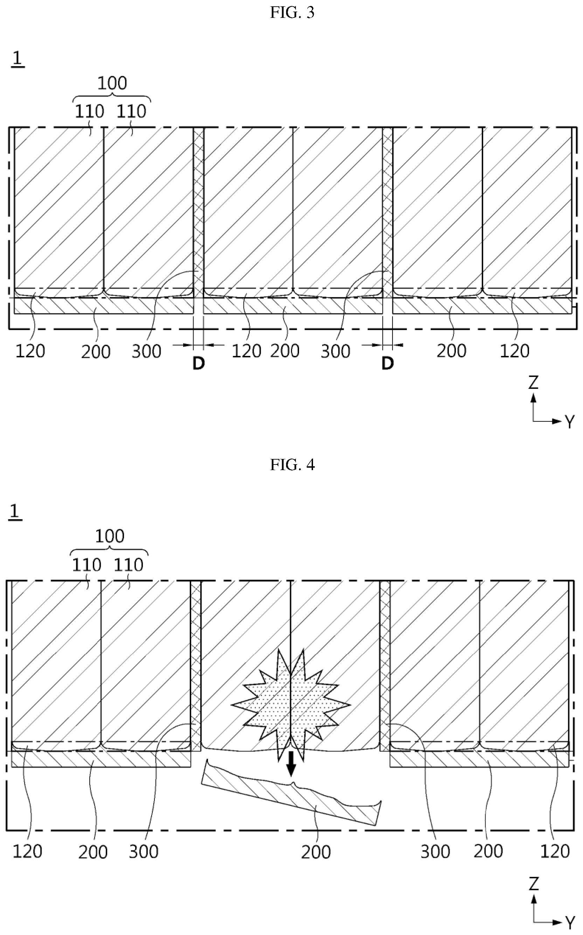

FIG. 3 is a cross-sectional view of a battery module according to an embodiment of the present disclosure. FIG. 3 is a cross-sectional view of the battery module 1 in the embodiment described with reference to FIG. 1, taken along line A-A.

Referring to FIG. 3, the battery module 1 may include multiple cell assemblies 100. The cell assembly 100 may include a battery cell 110. Although FIG. 3 illustrates the cell assembly 100 as including two battery cells 110, this is merely exemplary, and the number of battery cells 110 included in the cell assembly 100 is not limited. For example, the cell assembly 100 may include one battery cell 110 or four battery cells 110.

A single cell assembly 100 may be a collection of battery cells 110 on which a single cover 200 is disposed. For example, when one cell assembly 100 includes one battery cell 110, one cover 200 may be disposed on one battery cell 110. As another example, when one cell assembly 100 includes two battery cells 110, one cover 200 may be disposed on two battery cells 110. However, the number of covers 200 and the number of cell assemblies 100 do not necessarily have to be the same.

A pad 300 may be disposed between the plurality of cell assemblies 100. The pad 300 may have a plate shape. The pads 300 may be disposed between the cell assemblies 100 stacked in the ±Y direction.

The pad 300 may prevent or suppress the transfer of heat, flame, pressure, or impact between the cell assemblies 100. For example, the pad 300 may act as a thermal barrier to block or suppress the propagation of heat or flame between the cell assemblies 100. In addition, the pad 300 acts as a compression pad, thereby absorbing pressure or shape deformation due to swelling between the cell assemblies 100.

The pad 300 may partition a space in which multiple cell assemblies 100 are disposed. The multiple cell assemblies 100 may be partitioned by the pads 300. The pad 300 may include a thermal insulating material. The pad 300 may also include a heat-resistant material and/or an elastic material. For example, the pad 300 may include at least one of plastic, rubber, metal, silicone-based materials, aerogel, flame-retardant polyurethane, and laminated glass fiber. However, the materials that the pad 300 may include in the present disclosure are not limited.

The pad 300 may minimize or prevent the propagation of heat generated from a battery cell 110 of one cell assembly 100 to another cell assembly 100. The pad 300 may minimize or prevent the spreading of a thermal event occurring in one cell assembly 100 to another cell assembly 100. Each of the multiple cell assemblies 100 may be surrounded by the cover 200 and the pad 300 so as to be protected from thermal events generated in other cell assemblies 100. The cover 200 and the pad 300 may define an area in which a thermal event occurs in the battery module 1.

A single cell assembly 100 may be defined with a single discharge area 120. The discharge area 120 of the cell assembly 100 may be an area for discharging gases generated within the battery cell 110. The discharge area 120 of a single cell assembly 100 may be spaced apart from the discharge area 120 of another cell assembly 100 by a predetermined distance. For example, the discharge area 120 of one cell assembly 100 may be spaced apart from the discharge area of another cell assembly 100 by a distance equal to or greater than the thickness of the pad 300. However, the separation distance between one discharge area 120 and another discharge area 120 is not limited.

The cover 200 may cover the discharge area 120. A plurality of covers 200 may be individually disposed for the respective cell assemblies 100 to cover respective discharge areas 120. However, the number of covers 200 and the number of cell assemblies 100 do not necessarily have to be the same.

The plurality of covers 200 may be disposed to be spaced apart from each other. Referring to FIG. 3, the plurality of covers 200 individually disposed for the respective cell assemblies 100 may be arranged to be spaced apart from each other by a predetermined distance D. For example, the plurality of covers 200 may be spaced apart by a distance equal to or greater than the thickness of the pad 300.

The pad 300 may assist in the confining function of the cover 200. With the assistance of the pad 300, the other covers 200 corresponding to the battery cells 110 where an event does not occur may be maintained, thereby preventing the gas and flame emitted from the battery cell 110 where an event occurs from directly affecting the adjacent battery cells 110.

FIG. 4 is a drawing illustrating the detachment of a cover of a battery module according to an embodiment of the present disclosure. Referring to FIG. 4, a cover 200 covering the discharge area 120 of one cell assembly 100 may be detached independently of other covers 200. A thermal event may occur within the battery cell 110 included in the cell assembly 100, and the high-temperature and high-pressure gas generated within the battery cell 110 according thereto may be discharged to the outside by detaching the cover 200 of the discharge area 120.

For example, the cover 200 may be individually detached from the cell assembly 100 when the pressure of the gas generated inside the battery cell 110 exceeds a reference pressure. As another example, the cover 200 may be individually detached from the cell assembly 100 when the temperature of the gas generated inside the battery cell 110 exceeds a reference temperature.

The detachment of a cover 200 disposed in one cell assembly 100 may not affect the detachment of a cover 200 disposed in another cell assembly 100. When gas is discharged from a battery cell 110 in one of the multiple cell assemblies 100, only the cover 200 corresponding to the relevant cell assembly 100, among the plurality of covers 200, may be detached from the cell assembly 100, and the remaining covers 200 may remain coupled without being detached from the cell assembly 100.

The cover 200 of a cell assembly 100 where no gas is generated is not detached, thereby minimizing the impact of high-temperature and high-pressure gases discharged from other cell assemblies 100, preventing thermal propagation between the cell assemblies 100, and preventing a chain reaction of thermal runaway between the cell assemblies 100.

High-temperature and high-pressure gases discharged from one cell assembly 100 are blocked by the covers 200 of adjacent cell assemblies 100, thereby eliminating or minimizing the impact of high-temperature and high-pressure gases on other cell assemblies 100 where no thermal event has occurred. In the case where the cover 200 includes a fire-resistant and heat-resistant material, the above-described effect of the cover 200 may be maximized.

The cover 200 needs to be detachable so that, when thermal runaway occurs in the cell assembly 100, gas is easily discharged through the discharge area 120 from the cell assembly 100. To this end, the components, thickness, size, mass, or volume of the cover 200 may be determined such that the cover 200 is detached from the cell assembly 100 when the temperature of the gas generated within the cell assembly 100 exceeds a reference temperature or the pressure of the gas exceeds a reference pressure. Here, the reference pressure and reference temperature may vary depending on the specifications of the battery cell. For example, the reference pressure may range from 15 to 35 kgf/cm², and the reference temperature may range from 90 to 300°C, but the present disclosure is not limited thereto.

The method of detaching the cover 200 is not particularly limited as long as gas discharge through the discharge area 120 is facilitated. For example, the cover 200 may be entirely detached from the cell assembly 100 while maintaining its shape. However, when the cover 200 is detached from the cell assembly 100, it is not necessary for the cover 200 to maintain its shape. As another example, the cover 200 may be broken during the process of being detached from the cell assembly 100. For another example, only the broken portion of the cover 200 may be detached from the cell assembly 100.

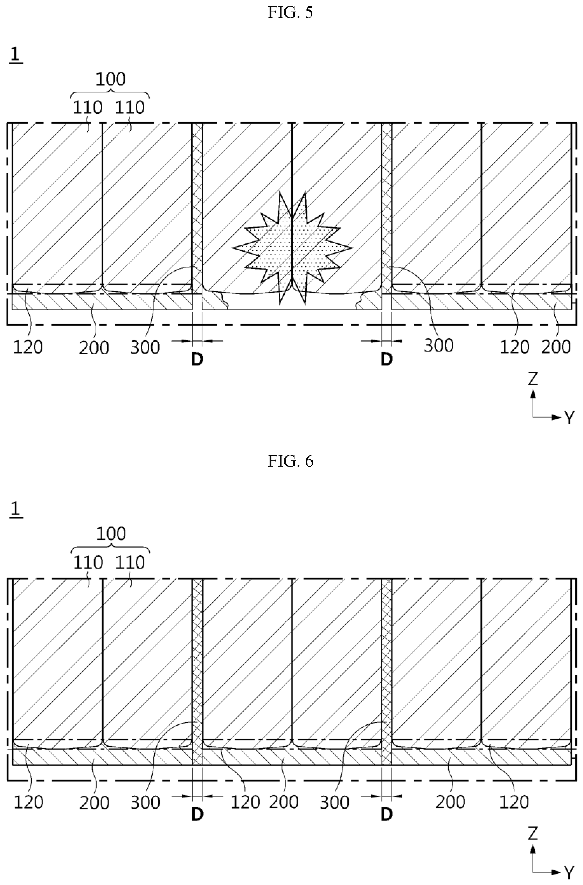

FIG. 5 is a drawing illustrating the melting of a cover of a battery module according to an embodiment of the present disclosure.

Referring to FIG. 5, at least a portion of the cover 200 covering the discharge area 120 of the cell assembly 100 may be melted. Due to a thermal event occurring within a battery cell 110 included in the cell assembly 100, high-temperature and high-pressure gas generated within the battery cell 110 may melt at least a portion of the cover 200 of the discharge area 120 while being discharged to the outside.

The covers 200 may individually melt when the temperature of the gas generated within the battery cell 110 exceeds a reference temperature. The melting of a cover 200 disposed in one cell assembly 100 may not affect the covers 200 disposed in other cell assemblies 100. When gas is discharged from a battery cell 110 within one cell assembly 100 among the multiple cell assemblies 100, only a portion of the cover 200 corresponding to the relevant cell assembly 100, among the plurality of covers 200, may melt, and the remaining covers 200 may not melt.

The cover 200 of a cell assembly 100 where no gas is generated may not melt, thereby minimizing the impact of high-temperature and high-pressure gas on the cell assembly 100 and preventing thermal propagation between the cell assemblies 100.

High-temperature and high-pressure gas discharged from the interior of one cell assembly 100 may be blocked by the covers 200 of adjacent cell assemblies 100, thereby eliminating or minimizing the impact of high-temperature and high-pressure gas on other cell assemblies 100 where a thermal event has not occurred.

The cover 200 needs to melt so that, when a thermal event occurs in the cell assembly 100, gas is easily discharged through the discharge area 120 from the cell assembly 100. To this end, the components, thickness, size, mass, or volume of the cover 200 may be determined such that the cover 200 is melted from the cell assembly 100 when the temperature of the gas generated within the battery cell 110 exceeds a reference temperature.

The area where the cover 200 melts due to gas is not particularly limited as long as gas discharge through the discharge area 120 is facilitated. When gas is generated in the cell assembly 100, the entirety or a part of the cover 200 disposed in the corresponding cell assembly 100 may melt.

For example, the cover 200 may include one portion made of a material that easily melts and the remaining portions made of a material that is relatively difficult to melt. As another example, the cover 200 may include a material that easily melts throughout the entire area.

FIG. 6 is a cross-sectional view illustrating the arrangement of a cover and a pad of a battery module according to an embodiment of the present disclosure.

To avoid repetitive explanation, the components of the battery module 1 that have been described with reference to FIGS. 1 to 5 will not be described.

Referring to FIG. 6, at least some of one or more pads 300 may extend such that a portion of the area thereof is disposed between the plurality of covers 200. At least some of one or more pads 300 may partition the plurality of covers 200. The plurality of covers 200 may be partitioned by one or more pads 300. The pads 300 may include a thermal insulating material and/or an elastic material.

The pad 300 may minimize or prevent heat generated from a battery cell 110 of one cell assembly 100 from propagating to another cell assembly 100. The pad 300 may minimize or prevent a thermal event occurring in one cell assembly 100 from propagating to another cell assembly 100. Each of the plurality of cell assemblies 100 may be respectively surrounded by the covers 200 and pads 300 so as to be protected from thermal events occurring in other cell assemblies 100. As described above, the cover 200 and the pad 300 may confine the area where a thermal event occur in the battery module 1, thereby preventing and/or delaying a chain reaction of explosions of the battery cells 110. Therefore, according to the battery module 1 according to the embodiments of the present disclosure, it is possible to eliminate or minimize the thermal impact of high-temperature gases or flames generated in a specific battery cell 110 on other battery cells 110, and to effectively prevent or minimize thermal runaway propagation between multiple battery cells 110.

As described with reference to FIGS. 4 and 5, when high-temperature and high-pressure gas is generated in the discharge area 120 of a cell assembly 100, one or more covers 200 may be detached or melted, thereby discharging the gas. In this case, the pad 300 may minimize or prevent the high-temperature and high-pressure gas discharged from one cell assembly 100 from spreading to other covers 200.

The pad 300 may minimize or prevent the propagation of thermal runaway generated in one cell assembly 100 to another cell assembly 100.

The plurality of covers 200 may be disposed to be spaced apart from each other by the pads 300. Referring to FIG. 6, the plurality of covers 200 individually disposed for the respective cell assemblies 100 may be arranged to be spaced apart from each other by a predetermined distance D. For example, the plurality of covers 200 may be spaced apart by a distance equal to or greater than the thickness of the pad 300.

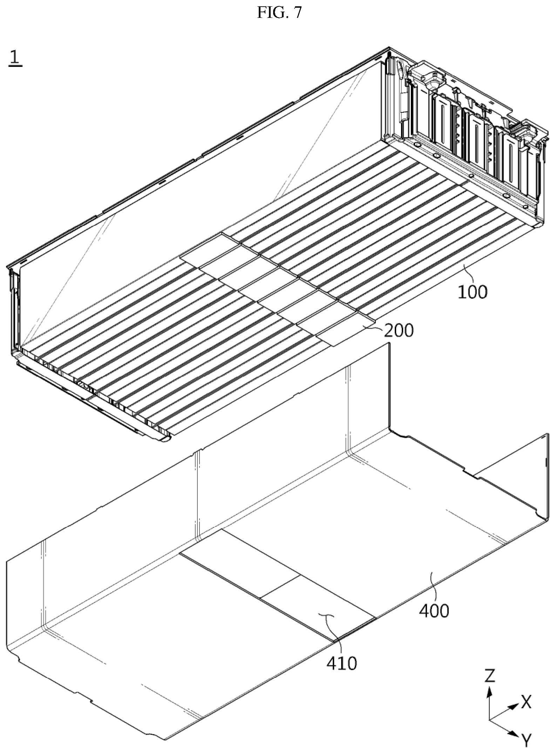

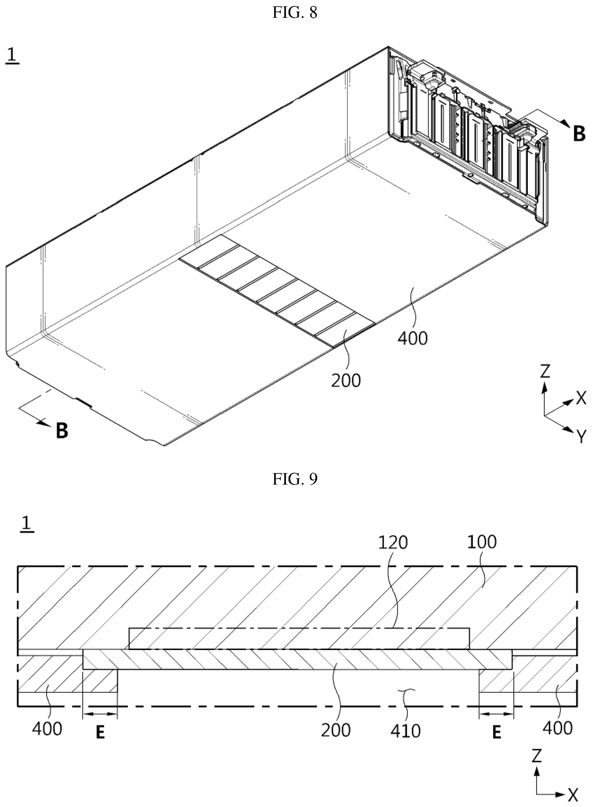

FIGS. 7 and 8 are drawings illustrating a battery module including a case according to an embodiment of the present disclosure.

To avoid repetitive descriptions, the components of the battery module 1 that have been described with reference to FIGS. 1 and 2 will not be described.

Referring to FIG. 7, the battery module 1 may include multiple cell assemblies 100, a cover 200, and a case 400.

The case 400 may enclose at least a portion of the multiple cell assemblies 100. The case 400 may have one or more openings 410. At least a portion of the plurality of covers 200 may be exposed to the outside through the openings 410.

The multiple cell assemblies 100 may be stacked face-to-face and have a plurality of outer surfaces exposed to the outside. For example, referring to FIG. 7, the plurality of face-to-face stacked cell assemblies 100 may have a hexahedral shape with six outer surfaces, but is not limited thereto.

The case 400 may be configured to enclose at least a portion of the outer surfaces of the plurality of stacked cell assemblies 100. Referring to FIG. 7, the case 400 may be configured to enclose at least three outer surfaces of the plurality of stacked cell assemblies 100. The case 400 may include at least three inner surfaces.

The case 400 may accommodate the plurality of cell assemblies 100 within its inner space. A space is formed within the case 400, and the multiple cell assemblies 100 may be accommodated within this space. The case 400 may include metal and/or plastic materials.

At least some of the plates constituting the case 400 may be configured as an integrated form. For example, the case 400 may be configured as a U-frame with a U-shaped cross-section and three inner surfaces by bending a plate twice. As another example, the case 400 may be configured as a U-frame with a U-shaped cross-section by joining three plates. In the case where the case 400 includes plurality of components, the components may be coupled by welding or bolting, but is not limited thereto.

As illustrated, a busbar frame assembly may be coupled to the front and rear sides of the cell assembly 100 in the X-axis direction, and a cover may be further provided at the top of the cell assembly 100. After thermal resin is applied to the case 400, the cell assembly 100 may be placed, so that the busbar frame assembly is coupled to the front and rear opening sides of the case 400, and the top opening of the case 400 may be covered with a cover. End plates (not shown) may be further provided at the front and rear sides of the case 400. According to this configuration, the outer surfaces of the cell assembly 100, which has a hexahedral shape with six outer surfaces, may be protected. The opening 410 may be formed on at least one side of the case 400. Referring to FIG. 7, the opening 410 may be formed at a position corresponding to the cover 200. The opening 410 may be formed at a position corresponding to the discharge area 120. Preferably, the discharge area 120 may be located at the bottom of the cell assembly 100, and the opening 410 may be formed on the side of the case 400 corresponding to the bottom of the cell assembly 100, thereby achieving downward venting.

Although side venting may be achieved by providing venting holes in the busbar frame assembly or endplate, downward venting may allow high-temperature gases or flames to be discharged downward from the vehicle toward the ground, thereby minimizing the impact on other components of the vehicle, preventing fire from spreading throughout the vehicle, and preventing occupants from being harmed.

In this case, since the battery cells 110 are in close contact with each other, even when downward venting is performed, there is a risk that rising flames may travel over the side of the battery cell 110 and affect other adjacent battery cells 110. According to the present disclosure, the configuration of the cover 200 may prevent thermal propagation between the battery cells. Only the cover 200 corresponding to a specific battery cell 110 is detached or melted to open in the event of thermal runaway, thereby performing a venting function. The adjacent cover 200 maintains its shape and protects the battery cell 110 from high-temperature gases and flames. Therefore, thermal propagation between battery cells may be effectively delayed and prevented.

When the case 400 is moved in the +Z direction in the state of the battery module 1 illustrated in FIG. 7, the cell assemblies 100 and the case 400 may be combined, as illustrated in FIG. 8.

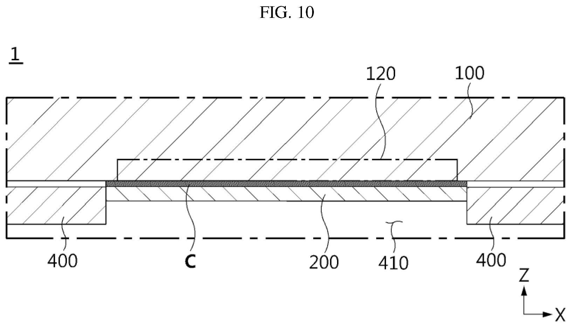

The arrangement and coupling relationship among the cell assemblies 100, the cover 200, and the case 400 will be described below with reference to FIGS. 9 and 10.

FIGS. 9 and 10 are cross-sectional views illustrating the arrangement of a cover and a case of a battery module according to an embodiment of the present disclosure, which are cross-sectional views of the battery module 1 taken along line B-B in FIG. 8.

FIG. 9 is a cross-sectional view illustrating an embodiment of fixing a cover 200 to a battery module 1. Referring to FIG. 9, the battery module 1 may include a cell assembly 100, a cover 200, and a case 400. A discharge area 120 may be formed in an area of the cell assembly 100 to discharge gas generated therein. The case 400 may include an opening 410. The cover 200 may be disposed to cover the discharge area 120. The opening 410 may be disposed corresponding to the cover 200.

The cover 200 may be secured by being disposed between the case 400 and the cell assembly 100. At least a portion of the cover 200 may be fixed by being pressed by the case 400 and the cell assembly 100. For example, a portion of the cover 200 may be sandwiched between the case 400 and the cell assembly 100, and pressed and secured by the case 400 and the cell assembly 100.

The portion of the cover 200 corresponding to the area between the case 400 and the cell assembly 100 may be referred to as a fitting area E. For example, referring to FIG. 9, a recess may be formed in the case 400 to support the fitting area E of the cover 200, and the cover 200 may be disposed in the recess of the case 400.

According to the present disclosure, in addition to the fitting area E, the cover 200 and case 400 may further include structures, such as a convex and concave structure, to support and secure the cover 200 thereon. For example, unlike the embodiment described with reference to FIG. 9, a groove may be formed on the cover 200, and a protrusion that interlocks with the groove formed on the cover 200 may be formed on the case 400. As another example, the cover 200 and case 400 may have repeated convex and concave structures formed thereon for interlocking with each other.

According to the present embodiment, the cover 200 may remain stably while being supported and secured between the cell assembly 100 and the case 400 until gas is discharged from the discharge area 120.

According to an embodiment of the present disclosure, when a thermal event occurs within the cell assembly 100 and gas is discharged through the discharge area 120, the entirety or a part of the cover 200 may be detached through the opening 410.

According to another embodiment of the present disclosure, the entirety or a part of the cover may be melted when gas is discharged through the discharge area 120.

FIG. 10 is a cross-sectional view illustrating another embodiment in which the cover 200 of the battery module 1 is secured. Referring to FIG. 10, the battery module 1 may include a cell assembly 100, a cover 200, and a case 400. A discharge area 120 may be formed in an area of the cell assembly 100 to discharge gas generated therein. The case 400 may include an opening 410. The cover 200 may be disposed to cover the discharge area 120. The opening 410 may be disposed corresponding to the cover 200.

Referring to FIG. 10, at least one side of the cover 200 may be bonded to and secured to the cell assembly 100 by an adhesive material C. For example, the cover 200, with the adhesive material C applied to the side facing the cell assembly 100, may be attached and secured to a position corresponding to the discharge area 120 of the cell assembly 100. The adhesive material C may include, but is not limited to, acrylic and/or silicone.

According to the present embodiment, the cover 200 may remain stably while being supported and secured between the cell assembly 100 and the case 400 until gas is discharged from the discharge area 120. When gas is discharged through the discharge area 120, the entirety or a part of the cover 200 may be detached through the opening 410. The entirety or a part of the cover may be melted when gas is discharged through the discharge area 120.

The embodiment of the battery module 1 described with reference to FIG. 9 and the embodiment of the battery module 1 described with reference to FIG. 10 are not optional and may be applied together. For example, the cover 200 may include a fitting area E disposed between the cell assembly 100 and the case 400, and one side of the cover 200 may be bonded to the cell assembly 100 by an adhesive material C. Furthermore, a structure for the case 400 to support and secure the cover 200, such as a convex and concave structure, may be further included in the cover 200 and the case 400.

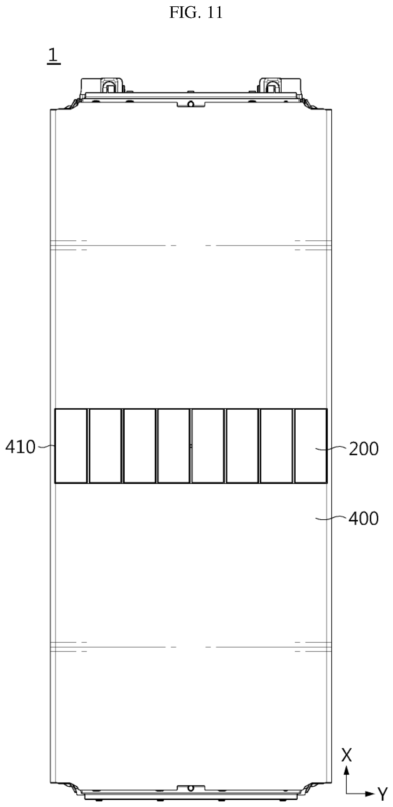

FIG. 11 is a drawing illustrating the arrangement of a cover and an opening of a battery module according to an embodiment of the present disclosure. FIG. 11 is a bottom view of the battery module 1 when viewed in the +Z direction. To avoid repetitive descriptions, the components of the battery module 1 that have been described above with reference to other drawings will not be described.

Referring to FIG. 11, at least some of the plurality of covers 200 may be arranged in a row along the ±Y direction. According to the present embodiment, a plurality of discharge areas (see FIG. 2) disposed in the plurality of cell assemblies may also be arranged in a row along the ±Y direction, and the covers 200 may be disposed in a row along the ±Y direction to cover the plurality of discharge areas, and exposed to the outside.

Referring to FIG. 11, the opening 410 of the case 400 may be formed in a size and a shape that allow the plurality of covers 200 arranged in a row along the ±Y direction to be exposed to the outside. The plurality of covers 200 may be individually disposed at positions corresponding to the respective openings 410 and exposed to the outside.

The shape of the opening 410 according to the arrangement of the plurality of covers 200 is not limited. For example, unlike the embodiment described with reference to FIG. 11, the covers 200 may be arranged in a row along the ±X direction, and the openings 410 may be formed in a size and a shape that allow the plurality of covers 200 arranged in a row along the ±X direction to be exposed to the outside.

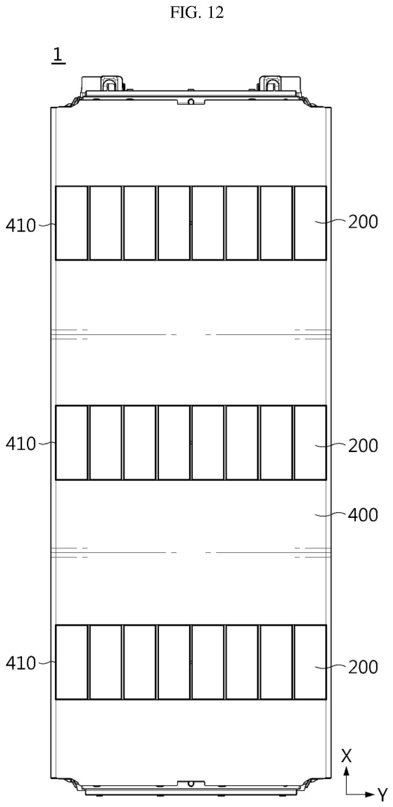

FIG. 12 is a drawing illustrating the arrangement of a cover and an opening of a battery module according to an embodiment of the present disclosure.

FIG. 12 is a bottom view of the battery module 1 when viewed in the +Z direction. To avoid repetitive descriptions, the components of the battery module 1 that have been described above with reference to other drawings will not be described.

Referring to FIG. 12, at least some of a plurality of covers 200 may be arranged in a row along the ±Y direction, and exposed to the outside through the opening 410. Unlike the embodiment illustrated in FIG. 12, at least some of the plurality of covers 200 may be arranged in a row along the ±X direction, and exposed to the outside through the opening 410.

For example, the opening 410 of the case 400 may be formed in a size and a shape that allow the plurality of covers 200 arranged in a row to be exposed to the outside.

The opening 410 of the case 400 may be formed in a size and a shape so as to cover a portion of the cover 200 and allow a portion thereof to be exposed. In this case, the portion of the cover 200 covered by the case 400 may be identical to or similar to the fitting area E in FIG. 9.

The case 400 may include a plurality of openings 410. The opening 410 of the case 400 may be formed in a size and a shape that allow the plurality of covers 200 arranged in a row to be exposed to the outside. The number of openings 410 included in the case 400 is not particularly limited. For example, referring to FIG. 12, the case 400 may include three openings 410.

The plurality of covers 200 may be individually disposed at positions corresponding to the plurality of openings 410 and exposed to the outside. Each cover 200 may be disposed at a position corresponding to the discharge area (not shown) disposed in the cell assembly 100.

The position of the cover 200 and the position and shape of the opening 410 are not particularly limited.

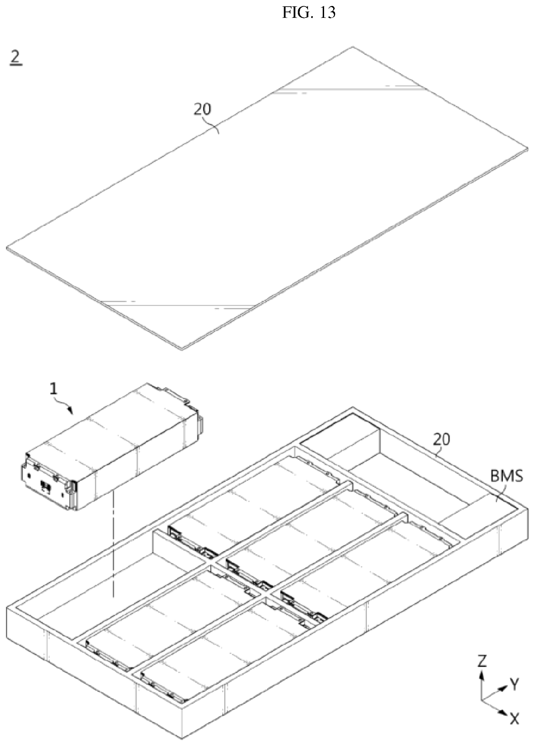

FIG. 13 is a diagram illustrating a battery pack including a battery module according to an embodiment of the present disclosure.

Referring to FIG. 13, a battery pack 2 according to an embodiment of the present disclosure may include one or more battery modules 1 described above with reference to other drawings. In addition, the battery pack 2 may further include components other than the battery module 1 according to the present disclosure. For example, the battery pack 2 according to the present disclosure may further include components such as a BMS (Battery Management System), a busbar, a relay, and a current sensor.

The battery pack 2 may further include a pack case 20. The pack case 20 may provide a space in which one or more battery modules 1 may be accommodated. When the battery pack 2 includes a plurality of battery modules 1, the pack case 20 may include partitioned spaces for respectively accommodating the plurality of battery modules 1.

As previously mentioned, since the battery module 1 is capable of downward venting, the battery pack 2 may also be configured to discharge gases emitted from the battery cells within the battery module 1 downward. Typically, since the battery pack 2 is mounted lower than the occupants of a vehicle, such as an electric vehicle, when gas is emitted upward from the battery pack 2, it may cause harm to the occupants. According to the battery pack 2 of the present disclosure, gas may be discharged downward without causing harm to the occupants, thereby significantly improving occupant safety.

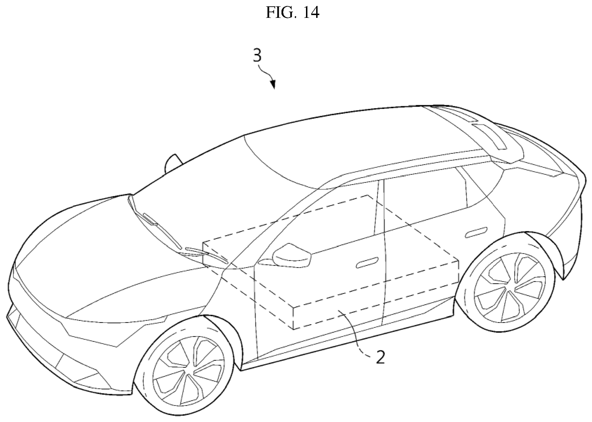

FIG. 14 is a diagram illustrating a vehicle including a battery pack according to an embodiment of the present disclosure.

The battery pack 2 may include the same components as the battery packs described above with reference to other drawings.

Referring to FIG. 14, the vehicle 3 may include one or more battery packs 2 or battery modules 1. For example, the vehicle 3 may be one of an electric vehicle, a hybrid vehicle, or a plug-in hybrid vehicle, but is not limited thereto. The vehicle 3 may be one of a four-wheeled vehicle and a two-wheeled vehicle. The vehicle 3 may be operated by power supplied from a battery pack 2 or battery module 1 according to embodiments of the present disclosure.

None of the embodiments of the present disclosure described above are mutually exclusive or distinct from each other. The configurations or functions described in the foregoing embodiments may be used in combination or in conjunction with one another.

For example, it means that a configuration A described in a specific embodiment and/or drawing may be coupled to a configuration B described in another embodiment and/or drawing. That is, even when such combinations are not explicitly described, unless it is expressly stated that certain combinations are not possible, it should be understood that such combinations are possible.

The above detailed description should not be construed as being limited in all aspects but rather considered as illustrative. The scope of the present disclosure should be determined by the reasonable interpretation of the appended claims, and all modifications within the equivalent scope of the present disclosure are to be included within the scope thereof.

## Claims

1. A battery module comprising:
a plurality of cell assemblies comprising one or more battery cells and a discharge area configured to discharge gas generated within the battery cell; and
a plurality of covers individually disposed for the respective cell assemblies and configured to cover the discharge area.

2. The battery module of claim 1,
wherein the covers are individually detached from the cell assemblies when a pressure of gas generated within the battery cell exceeds a reference pressure.

3. The battery module of claim 1,
wherein the covers are individually melted when a temperature of gas generated within the battery cell exceeds a reference temperature.

4. The battery module of claim 1,
wherein the plurality of covers are arranged to be spaced apart from each other.

5. The battery module of claim 1, further comprising
one or more pads disposed between the plurality of cell assemblies.

6. The battery module of claim 5,
wherein the pad comprises an insulating material.

7. The battery module of claim 6,
wherein at least some of the one or more pads extend so that a portion thereof is disposed between the plurality of covers.

8. The battery module of claim 1,
wherein at least a portion of the plurality of covers is bonded to the cell assembly by an adhesive material.

9. The battery module of claim 1, further comprising
a case configured to enclose at least a portion of outer surfaces of the plurality of cell assemblies and having at least one opening formed therein,
wherein the plurality of covers are exposed to an outside through the opening.

10. The battery module of claim 9,
wherein at least some of the plurality of covers are fixed so that a portion thereof is disposed between the case and the cell assembly.

11. The battery module of claim 9,
wherein at least some of the plurality of covers are arranged in a row along the opening.

12. The battery module of claim 9,
wherein the case comprises a plurality of openings, and
wherein the plurality of covers are individually disposed at positions corresponding to the plurality of openings and exposed to the outside.

13. The battery module of claim 9,
wherein the case is configured to enclose at least three outer surfaces of the plurality of cell assemblies,
wherein the opening is formed on at least one side of the case, and
wherein at least a portion of the plurality of covers is sandwiched between the cell assembly and the case or bonded to the cell assembly by an adhesive material.

14. The battery module of claim 13,
wherein, when gas is discharged from an interior of a battery cell within any one of the plurality of cell assemblies, a cover corresponding to the relevant cell assembly, among the plurality of covers, is configured to be detached from the cell assembly, and the remaining ones of the plurality of covers are configured not to be detached from the remaining ones of the plurality of cell assemblies.

15. The battery module of claim 1,
wherein the cover comprises a fire-resistant and heat-resistant material.

16. The battery module of claim 1,
wherein the battery cell has a plate shape, wherein the cell assembly is configured by stacking the battery cells face-to-face, and wherein the discharge area is disposed at a bottom of the cell assembly.

17. A battery pack comprising a battery module of any one of claims 1 to 16.

18. A vehicle comprising a battery pack of claim 17.
